# EUROPEAN PATENT SPECIFICATION

(11) **EP 1 015 853 B1**
(45) Date of publication and mention of the grant of the patent: **30.07.2008**
(21) Application number: 97942360.5
(22) Date of filing: 19.09.1997
(51) Int. Cl.: G01F 11/24

(54) **DOSING FEEDER**
DOSIER- UND ABGABEVORRICHTUNG
DISPOSITIF D'ALIMENTATION ET DE DOSAGE

(30) Priority: 20.09.1996 SE 9603454
(43) Date of publication of application: 05.07.2000
(73) Proprietor: Väderstad-Verken AB, 590 21 Väderstad (SE)
(72) Inventor: STARK, Göran, S-590 48 Vikingstad (SE)
(74) Representative: Lettström, Richard Wilhelm
(86) International application number: PCT/SE1997/001583
(87) International publication number: WO 1998/012512

(56) References cited:
- DE-A- 2 502 849
- DE-C- 807 722
- GB-A- 191 018 990
- DERWENT'S ABSTRACT, No. 89-184926/25, week 8925; & SU,A,1 428 926 (IVAN MACH TRACTOR), 7 October 1988.

## Description

The present invention relates to a dosing feeder, for dosing powder and/or granular material, comprising a rotatable rotor with circumferentially distributed, longitudinally extending grooves which contain variable dosing chambers, and a rotatable mechanism which is axially displaceable relative to said rotor.

Prior art dosing feeders are equipped with removable inserts for regulating the dosing quantity when the quantity of dosed material is small. These inserts are laid in each groove in the rotor. Inserts of different sizes exist for different degrees of dosing. It is obvious that these systems are complicated and unsatisfactory when they must be manually adjusted for the smaller degrees of dosing. Furthermore it is inconvenient to reach the dosing feeder under the container for the seed or some other powder and/or granular material.

The object of the present invention is to provide a dosing feeder of the type mentioned in the introduction which can be adjusted right down to small degrees of dosing without extra inserts being needed to be used.

Another object of the present invention is to provide a dosing feeder in which the degree of dosing can be continuously changed down to small quantities.

Yet another object of the present invention is to provide a dosing feeder which can be automatically remote-controlled right down to small dosing quantities.

GB 18,990 discloses a dosing feeder according to the introductory portion of claims 1 and 2.

The object is achieved according to the invention through a dosing feeder which is characterized in that in each groove a first and a second means for delimiting the dosing chamber are arranged, on the one hand at the end of the end of the casing which is adjacent to the dosing chamber, on the other hand at the opposing end of the dosing chamber, whereby said first and second means are arranged to cooperate so that when the end of the casing approaches the end of the grooves, the dosing chamber reduces continuously or stepwise depending on the design of said means.

The invention will be described more closely below with reference to the accompanying drawings, which show preferred embodiments of the dosing feeder.
- Fig. 1: shows a partially sectioned lateral view of a sowing machine which is equipped with a dosing feeder according to the invention.
- Fig. 2: shows a perspective view of the dosing feeder according to the invention.
- Fig. 3: shows a perspective view of the dosing feeder where certain parts have been removed for the sake of clarity.
- Fig. 4: shows a perspective view of a second embodiment of the dosing feeder.
- Fig. 5: shows a partial longitudinal section through the embodiment in Figs. 2 and 3 of the dosing feeder.
- Fig. 6: shows a partial longitudinal section through a further embodiment of the dosing feeder.

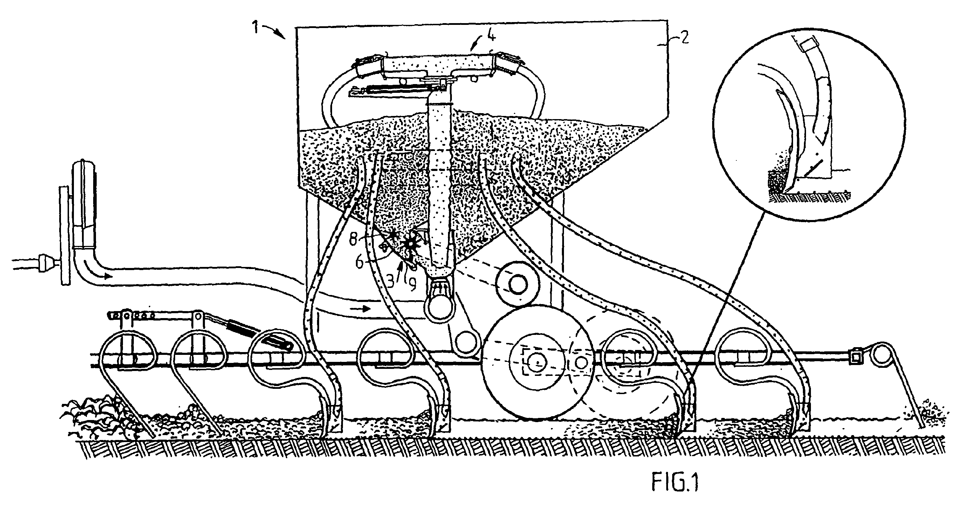

Fig. 1 shows a sowing machine 1 with a container 2 for seed or some other powder and/or granular material, a dosing feeder 3 according to the invention and a pneumatic distribution device 4 for seed arranged in the container, said device being connected to the container 2 via the dosing feeder 3.

The dosing feeder 3 comprises an inner rotor 5 with longitudinally extending grooves 6 taken up in the circumferential direction, a mechanism (not shown) enclosed with the rotor, manually or by means of a motor movable along the longitudinal direction of the rotor, which mechanism determines the degree of dosing and which is not shown in Fig. 1 but henceforth will be given the reference numeral 7, a shaft 8 equipped with rods arranged, for example, at an angle for feeding of the dosed material, and a lip 9 extending along the rotor and in contact with the rotor for wiping off material in the grooves 6 so that the correct dosing quantity can always be given.

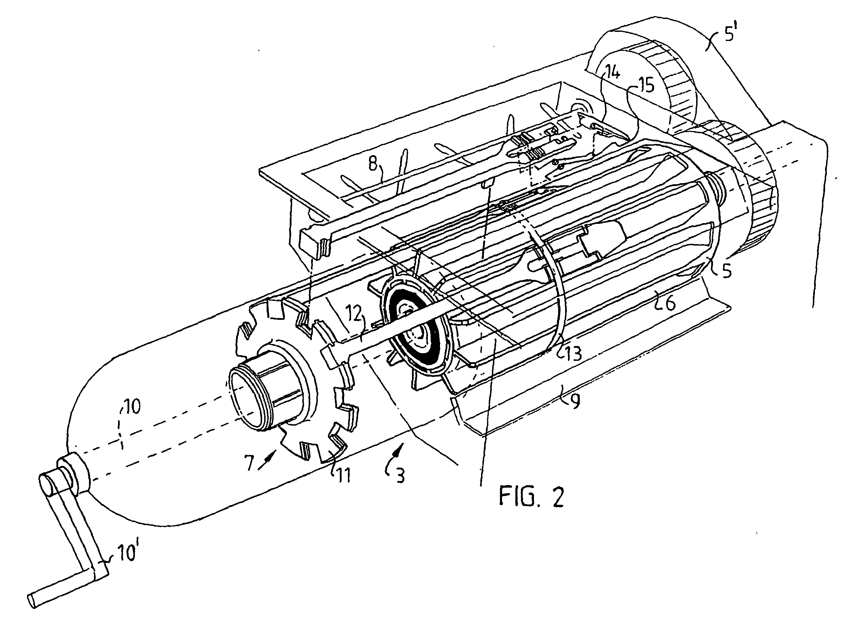

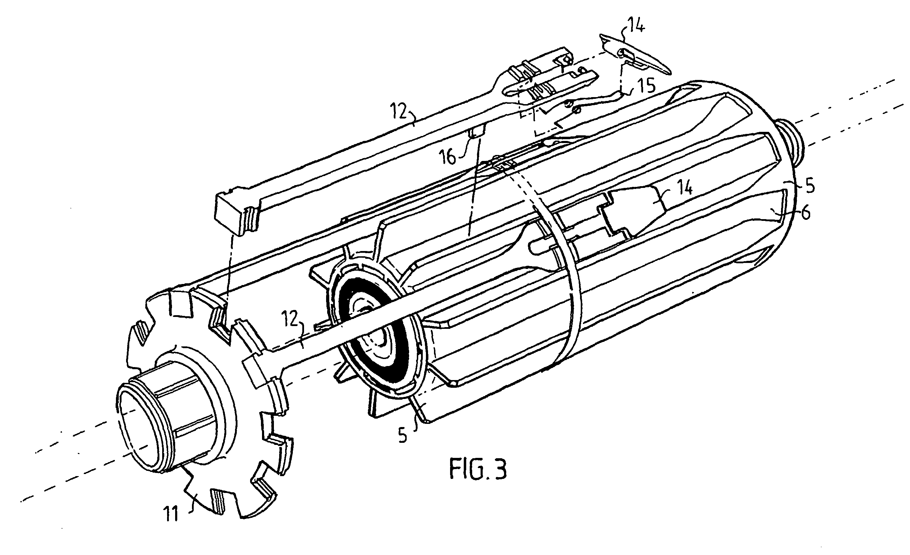

The dosing feeder in Figs. 2 and 3 shows the first embodiment 3 and illustrates its construction and function. The rotor 5 is driven by means of a schematically shown motor 5'. Through turning of a shaft 10 by means of a crank 10', arms 12, the positions of which in relation to the rotor determine which degree of dosing is set, fastened onto a wheel 11 at a first end by a splined joint, are displaced on the displaceable wheel. The arms can at a second front fork-shaped end be held in the grooves through pretensioning of the same to the rotor. They can also be held in place by means of some type of holder like the strap 13 extending around the rotor, shown in Fig. 3. A distance heel 16 is arranged on each arm 12 for contact against the bottom of the groove 6. The material, which enters in the position for the agitator shaft 8 equipped with rods, runs into a limited space in the groove 6 and is wiped off by means of the lip 9 and then emptied out on the other side of this lip for further transport to the pneumatic distributor of the material, such as seed.

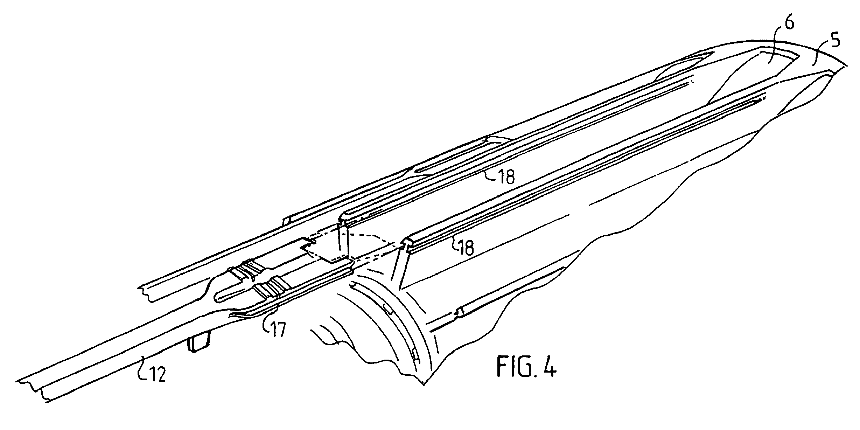

Fig. 4 shows an embodiment of the dosing feeder where the arms 12 are held in the grooves 6 through a slot/flange arrangement where the flanges 17 on opposite sides of the arm at its fork-shaped end run in corresponding slots 18 at the top of each groove 6.

The fork-shaped end of the arms 12 facing away from the wheel 11 carries a flap 14 by means of pins arranged on the sides of the flap, which pins are introduced into corresponding indentations at the end of the arm preferably by a snap function. The flap is loaded towards the bottom of the groove by means of a spring 15 arranged between flap and arm. An arm/spring/flap construction is consequently arranged for each groove on the rotor, and each arm 12 at its end facing away from the flap is fixable in its own groove in the periphery of the wheel 11.

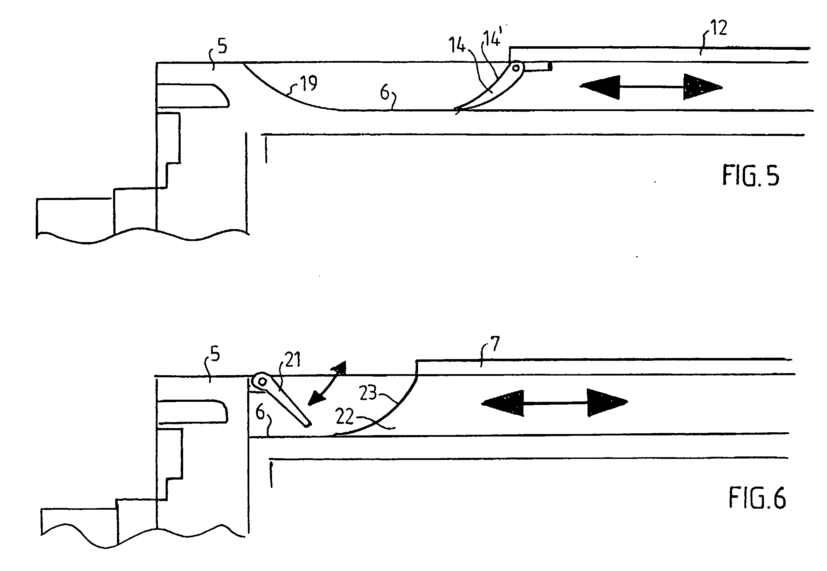

Fig. 5 shows the dosing feeder according to the invention with the rotor 5 and the rotatable mechanism 7. In Fig. 5 one of the grooves 6, the end of which where the material is to be fed is shaped as a curved part 19, which begins at the base of the groove and finishes at the end of the groove. The side walls of each groove are, however, always straight and parallel with each other. A swingable flap 14 covering the width of the groove is resiliently mounted at the outer end of the arm 12. The flap 14 is bent upwards at its end so that it follows the curved part 12 of the groove when it is displaced towards the inlet opening. The above surface 14' of the flap 14, together with the side walls of the groove and the bottom, delimit the dosing chamber for the portion of material which is to be transported by each groove from the container to the distribution means 4.

Fig. 6 shows a second embodiment of the dosing feeder according to the invention with the rotor 5 and the rotatable mechanism 7 with arms 12 for each groove 6. This embodiment of the dosing feeder is in principle a mirror image of the embodiment in Fig. 5 and differs from this embodiment insofar as a flap 21 is mounted in bearings at the end of the groove 6 at the open part of the groove. The rotatable casing 7 at its end is equipped with a shoe 22 with a curved upper surface 23, the shape of which essentially corresponds to the shape of the end of the groove in the embodiment according to Fig. 5.

The dosing feeder according to the invention functions so that, through the displacement of the mechanism 7 along the rotor 5 provided with grooves 6 in the circumferential direction, the length of the part of each groove 6 facing towards the seed in the container is at the same time reduced resp. increased. The agitator shaft 8 ensures that no seed fastens and forms bridges in the container and that seed is fed the whole time into the dosing spaces of the grooves 6. These spaces, which form the dosing chambers of the dosing feeder can, through the arrangement of the flaps and the shoes in accordance with the invention as described above and shown in the figures, be reduced down to extremely small and exact dosing quantities. This can take place manually or automatically through remote control from the driver's cabin. A worm drive can be arranged for the displacement of the arms 12 of the mechanism 7 which can either be manoeuvered manually with a handle or directly from the driver's cabin by means of an electric motor or the like.

The dosing feeder according to the invention has been described with reference to the embodiments shown on the drawings and described in the description. Naturally the dosing feeder is not limited to these embodiments but can be modified within the scope of the accompanying claims.

## Claims

1. Dosing feeder for the dosing of powder and/or granular material comprising a rotatable rotor (5) with circumferentially spaced grooves (6) extending in the longitudinal direction which contain variable dosing chambers, and a rotatable mechanism (7) which is axially displaceable relative to said rotor, **characterized in that** said mechanism comprises first and second means (12,13;21,22,23;34,35,31,32) arranged in each groove (6) for delimiting the dosing chamber in each groove (6), that said first means is formed by the end part (19) of the groove (6) being shaped as an arc and that said second means is formed by a flap (14) which is arranged to follow the bottom of the groove during activation of said mechanism, wherein said first and second means are arranged to cooperate in order to reduce resp. increase continuously or stepwise the volume of the dosing chambers in each groove.

2. Dosing feeder for dosing of powder and/or granular material comprising a rotatable rotor (5) with circumferentially distributed grooves (6) extending in the longitudinal direction which contain variable dosing chambers, and a rotatable mechanism (7) which is axially displaceable relative to said rotor, **characterized in that** said mechanism comprises in each groove (6) first and second means (12,13;21,22, 23;34,35,31,32) arranged for delimiting the dosing chamber in each groove (6), that said first means is a flap (21) which is mounted in bearings at the end part of the groove, and that said second means is a shoe (22) with a curved upper surface (23) so that the flap is arranged to slide on the curved upper surface of the shoe during activation of said mechanism, wherein said first and second means are arranged to cooperate in order to reduce resp. increase continuously or stepwise the volume of the dosing chambers in each groove.

3. Dosing feeder according to any of Claims 1 or 2, **characterized in that** an arm (12) arranged in each groove (6) is at a first end connected with a wheel (11) displaceable in the axial direction and is at a second end connected with the second means.

4. Dosing feeder according to Claim 3, **characterized in that** each arm (12) is radially fixed in the respective grooves (6) by means of a strap (13) extending around the rotor (5).

5. Dosing feeder according to Claim 3, **characterized in that** each arm (12) is radially fixed in the respective grooves (6) by means of flanges (17) arranged on both sides of the arm (12) which run in corresponding slots (18) in each groove (6).

6. Dosing feeder according to Claims 1 and 3, **characterized in that** the second end of each arm (12) comprises a fork in which the flap (14) is supported in bearings.

7. Dosing feeder according to Claim 6, **characterized in that** the flap (14) is loaded towards the bottom of the groove (6) by means of a spring (15) arranged between the flap (14) and the arm (12).

## Patentansprüche

1. Dosierzuführvorrichtung zum Dosieren von Pulver und/oder granuliertem Material, welche einen drehbaren Rotor (5) mit umlaufend beabstandeten Kerben (6), die sich in Längsrichtung erstrecken und die variable Dosierkammern aufweisen, und einen drehbaren Mechanismus (7), der relativ zum Rotor axial verlagerbar ist, umfasst, **dadurch gekennzeichnet, dass** der Mechanismus erste und zweite Vorrichtungen (12, 13; 21, 22, 23; 34, 35, 31, 32) umfasst, die in jeder Kerbe (6) angeordnet sind, um die Dosierkammer in jeder Kerbe (6) zu begrenzen, und dass die erste Vorrichtung durch das Endteil (19) der Kerbe (6), die als Bogen geformt ist, gebildet wird und dass die zweite Vorrichtung durch eine Klappe (14) gebildet wird, die angeordnet ist, dem Boden der Kerbe während der Aktivierung des Mechanismus zu folgen, wobei die ersten und zweiten Vorrichtungen angeordnet sind, um zusammenzuwirken, um fortlaufend oder schrittweise das Volumen der Dosierkammern in jeder Kerbe zu reduzieren bzw. zu vergrößern.

2. Dosierzuführvorrichtung zum Dosieren von Pulver und/oder granuliertem Material, welche einen drehbaren Rotor (5) mit umlaufend verteilten Kerben (6), die sich in Längsrichtung erstrecken und die variable Dosierkammern aufweisen, und einen drehbaren Mechanismus (7), der relativ zum Rotor axial verlagerbar ist, umfasst, **dadurch gekennzeichnet, dass** der Mechanismus erste und zweite Vorrichtungen (12, 13; 21, 22, 23; 34, 35, 31, 32) umfasst, die in jeder Kerbe (6) angeordnet sind, um die Dosierkammer in jeder Kerbe (6) zu begrenzen, und dass die erste Vorrichtung eine Klappe (14) ist, die in Lagern am Endteil der Kerbe befestigt ist und dass die zweite Vorrichtung ein Gleitstück (22) mit einer gekrümmten oberen Oberfläche (23) ist, so dass die Klappe angeordnet ist, um auf der gekrümmten oberen Oberfläche des Gleitstücks während der Aktivierung des Mechanismus zu gleiten, wobei die ersten und zweiten Vorrichtungen angeordnet sind, um zusammenzuwirken, und fortlaufend oder schrittweise das Volumen der Dosierkammern in jeder Kerbe zu reduzieren bzw. zu vergrößern.

3. Dosiervorrichtung gemäß einem der Ansprüche 1 oder 2, **dadurch gekennzeichnet, dass** ein in jeder Kerbe (6) angeordneter Arm (12) an einem ersten Ende mit einem Rad (11), welches in axialer Richtung verlagerbar ist, verbunden ist und an einem zweiten Ende mit der zweiten Vorrichtung verbunden ist.

4. Dosiervorrichtung gemäß Anspruch 3, **dadurch gekennzeichnet, dass** jeder Arm (12) radial in den entsprechenden Kerben (6) durch eine Spange (13), die sich rund um den Rotor (5) erstreckt, befestigt ist.

5. Dosiervorrichtung gemäß Anspruch 3, **dadurch gekennzeichnet, dass** jeder Arm (12) radial in den entsprechenden Kerben (6) durch Flansche (17), die an beiden Seiten des Arms (12) befestigt sind, die in entsprechenden Schlitzen (18) in jeder Kerbe (6) verlaufen.

6. Dosiervorrichtung gemäß den Ansprüchen 1 und 3, **dadurch gekennzeichnet, dass** das zweite Ende eines jeden Arms (12) eine Gabel umfasst, in welcher die Klappe (14) in Lagern gelagert ist.

7. Dosiervorrichtung gemäß Anspruch 6, **dadurch gekennzeichnet, dass** die Klappe (14) in Richtung zum Boden der Kerbe (6) durch eine Feder (15), die zwischen der Klappe (14) und dem Arm (12) angeordnet ist, belastet wird.

## Revendications

1. Dispositif d'alimentation et de dosage pour le dosage de matériau en poudre et/ou granulaire comprenant un rotor rotatif (5) avec des gorges espacées circonférentiellement (6) s'étendant dans la direction longitudinale qui contiennent des chambres de dosage variables, et un mécanisme rotatif (7) déplaçable axialement par rapport audit rotor, **caractérisé en ce que** ledit mécanisme comprend des premier et deuxième moyens (12, 13 ; 21, 22, 23 ; 34, 35, 31, 32) agencés dans chaque gorge (6) pour délimiter la chambre de dosage dans chaque gorge (6), **en ce que** ledit premier moyen est formé par la partie d'extrémité (19) de la gorge (6) étant en forme d'un arc et **en ce que** ledit deuxième moyen est formé par un volet (14) qui est agencé pour suivre le fond de la gorge pendant l'activation dudit mécanisme, dans lequel lesdits premier et deuxième moyens sont agencés pour coopérer afin de réduire ou d'augmenter, respectivement, de manière continue ou graduelle le volume des chambres de dosage dans chaque gorge.

2. Dispositif d'alimentation et de dosage pour le dosage de matériau en poudre et/ou granulaire comprenant un rotor rotatif (5) avec des gorges espacées circonférentiellement (6) s'étendant dans la direction longitudinale qui contiennent des chambres de dosage variables, et un mécanisme rotatif (7) déplaçable axialement par rapport audit rotor, **caractérisé en ce que** ledit mécanisme comprend dans chaque gorge (6) des premier et deuxième moyens (12, 13 ; 21, 22, 23 ; 34, 35, 31, 32) agencés pour délimiter la chambre de dosage dans chaque gorge (6), **en ce que** ledit premier moyen est un volet (21) qui est monté dans des supports à la partie d'extrémité de la gorge, et **en ce que** ledit deuxième moyen est un sabot (22) avec une surface supérieure courbée (23) de sorte que le volet soit agencé pour coulisser sur la surface supérieure courbée du sabot pendant l'activation dudit mécanisme, dans lequel lesdits premier et deuxième moyens sont agencés pour coopérer afin de réduire ou d'augmenter, respectivement, de manière continue ou graduelle le volume des chambres de dosage dans chaque gorge.

3. Dispositif d'alimentation et de dosage selon l'une quelconque des revendications 1 ou 2, **caractérisé en ce qu'**un bras (12) agencé dans chaque gorge (6) est situé à une première extrémité reliée à une roue (11) déplaçable dans la direction axiale et est située à une deuxième extrémité reliée au deuxième moyen.

4. Dispositif d'alimentation et de dosage selon la revendication 3, **caractérisé en ce que** chaque bras (12) est fixé radialement dans les gorges respectives (6) au moyen d'une bande (13) s'étendant autour du rotor (5).

5. Dispositif d'alimentation et de dosage selon la revendication 3, **caractérisé en ce que** chaque bras (12) est fixé radialement dans les gorges respectives (6) au moyen de brides (17) agencées des deux côtés du bras (12) qui s'étendent dans les rainures correspondantes (18) dans chaque gorge (6).

6. Dispositif d'alimentation et de dosage selon les revendications 1 et 3, **caractérisé en ce que** la deuxième extrémité de chaque bras (12) comprend une fourche dans laquelle le volet (14) est supporté dans des supports.

7. Dispositif d'alimentation et de dosage selon la revendication 6, **caractérisé en ce que** le volet (14) est chargé vers le fond de la gorge (6) au moyen d'un ressort (15) agencé entre le volet (14) et le bras (12).
